(19) Europäisches Patentamt

European Patent Office

Office européen des brevets

(11) **EP 0 654 914 B1**

(12) **EUROPEAN PATENT SPECIFICATION**

(45) Date of publication and mention
of the grant of the patent:
**27.08.2003 Bulletin 2003/35**

(51) Int Cl.⁷: **H04B 1/707**, H04L 27/00

(21) Application number: **94308548.0**

(22) Date of filing: **18.11.1994**

(54) **Spread spectrum communication switchable between FSK and PSK**

Zwischen FSK und PSK umschaltbare Spreizspektrumübertragung

Communication à spectre étalé commutable entre FSK et PSK

(84) Designated Contracting States:
**DE FR GB**

(30) Priority: **19.11.1993 JP 31427893**
**19.11.1993 JP 31427993**
**29.11.1993 JP 32326293**
**28.12.1993 JP 35393393**

(43) Date of publication of application:
**24.05.1995 Bulletin 1995/21**

(73) Proprietor: **VICTOR COMPANY OF JAPAN,**
**LIMITED**
**Kanagawa-ku Yokohama (JP)**

(72) Inventor: **Ishigaki, Yukinobu**
**Miura-shi, Kanagawa-ken (JP)**

(74) Representative: **Senior, Alan Murray**
**J.A. KEMP & CO.,**
**14 South Square,**
**Gray's Inn**
**London WC1R 5JJ (GB)**

(56) References cited:
**EP-A- 0 398 329**        **EP-A- 0 555 089**
**DE-A- 3 131 187**        **GB-A- 1 533 984**

## Description

This invention relates to a spread spectrum demodulating apparatus.

In some spread spectrum communication systems, a transmitter includes primary and secondary modulators. The primary modulator modulates a carrier with an information signal and thereby derives a primary modulation signal. In general, the modulation executed by the primary modulator is of the FM (frequency modulation) type, the FSK (frequency shift keying) type, or the PSK (phase shift keying) type. The secondary modulator modulates the primary modulation signal with a spread code and thereby derives a secondary modulation signal (a spread spectrum signal). The spread spectrum signal is transmitted from the transmitter to a receiver of the conventional communication systems. The receiver includes a spread code generator producing a spread code which corresponds to the spread code used in the transmitter. The receiver also includes a despreading circuit which despreads the spread spectrum signal with the spread code to recover a primary modulation signal from the spread spectrum signal. The despreading circuit is a demodulator having a function inverse with respect to the function of the secondary modulator in the transmitter. The receiver further includes a second demodulator which recovers an information signal from the primary modulation signal. The second demodulator has a function inverse with respect to the function of the primary modulator in the transmitter.

EP-A-0 555 089, upon which the pre-characterising portion of claim 1 is based, describes a spread spectrum communication system. The receiver of the system comprises a despreading circuit, an angle demodulator, a sync detection circuit and a clock signal generating circuit.

It is an object of the invention to provide an improved spread spectrum demodulating apparatus.

A first aspect of this invention provides a spread spectrum demodulating apparatus comprising:

a spread code generator for generating a spread code;

despreading demodulation means for multiplying an incoming spread spectrum modulation signal and the spread code;

a carrier reproducing circuit for reproducing a carrier

primary demodulating means for demodulating an output signal of the despreading modulation means into a recovered original information signal; and

synchronization detecting means for discriminating a noise level of a signal from the carrier reproducing circuit and outputting, in response to the discriminated noise level, a signal for synchronisation of the despreading demodulation means; characterised in that

the carrier reproducing circuit extracts carrier components from said output signal of the despreading modulation means in order to reproduce the carrier and provides the reproduced carrier to the primary demodulating means to be multiplied with said output of the despreading modulation means to demodulate said output signal of the despreading modulation means; wherein

a PLL circuit is contained in the carrier reproducing circuit between the despreading modulation means and the primary demodulating means, the PLL circuit generating an error signal, the synchronization detecting means discriminating the noise level of the error signal to output the signal for synchronization of the despreading modulation means.

Advantageously, the above spread spectrum demodulation apparatus may be adapted for demodulating a multiple-phase PSK signal which has been spread spectrum modulated, comprising the apparatus of the above described first aspect and further comprising:

a low pass filter for passing a multiple-phase PSK signal in the despread demodulation signal;

a level discriminator for discriminating a noise level of the error signal, and generating a synchronization capturing signal in response to the discriminated noise level; and

synchronization capturing means for capturing synchronization in response to the synchronization capturing signal, wherein

the carrier reproducing circuit is for reproducing a carrier in response to the multiple-phase PSK signal; and

the primary demodulating means is for multiplying the reproduced carrier and the multiple-phase PSK signal, and thereby demodulating the multiple-phase PSK signal into a plurality of demodulation-resultant signals.

Thus, the demodulation of multiple phase PSK signals subjected to spread spectrum modulation may be achieved.

The invention will be more clearly understood from the following description, given by way of example only, with reference to the accompanying drawings in which:

Fig. 1 is a block diagram of a spread spectrum demodulating apparatus according to a first embodiment of this invention.

Fig. 2 is a time-domain diagram of the waveforms of signals in the spread spectrum demodulating apparatus of Fig. 1.

Fig. 3 is a block diagram of a portion of a spread spectrum demodulating apparatus according to a second embodiment of this invention.

Fig. 4 is a block diagram of a spread spectrum demodulating apparatus according to a third embodiment of this invention.

Fig. 5 is a block diagram of a spread spectrum demodulating apparatus according to a fourth embodiment of this invention.

Fig. 6 is a time-domain diagram of the waveforms of signals in the spread spectrum demodulating apparatus of Fig. 5.

Fig. 7 is a time-domain diagram of the waveforms of signals in the spread spectrum demodulating apparatus of Fig. 5.

Fig. 8 is a diagram of a nonlinear detector in the spread spectrum demodulating apparatus of Fig. 5.

Fig. 9 is a time-domain diagram of the waveforms of signals in the nonlinear detector of Fig. 8.

Fig. 10 is a block diagram of a spread spectrum demodulating apparatus according to a fifth embodiment of this invention.

Fig. 11 is a time-domain diagram of the waveforms of signals in the spread spectrum demodulating apparatus of Fig. 10.

Fig. 12 is a time-domain diagram of the waveform of a signal in the spread spectrum demodulating apparatus of Fig. 10.

Fig. 13 is a block diagram of a filter in the spread spectrum demodulating apparatus of Fig. 10.

Fig. 14 is a diagram of the characteristic of the filter in Fig. 13.

Fig. 15 is a diagram of the frequency response characteristic of the filter in Fig. 13.

Fig. 16 is a diagram of the spectrum of a signal in the differentiation-noise-related output signal "e(t)" of the spread spectrum demodulating apparatus of Fig. 10.

Fig. 17 is a time-domain diagram of the waveforms of signals in the spread spectrum demodulating apparatus of Fig. 10.

Fig. 18 is a block diagram of a spread spectrum demodulating apparatus according to a sixth embodiment of this invention.

First Embodiment

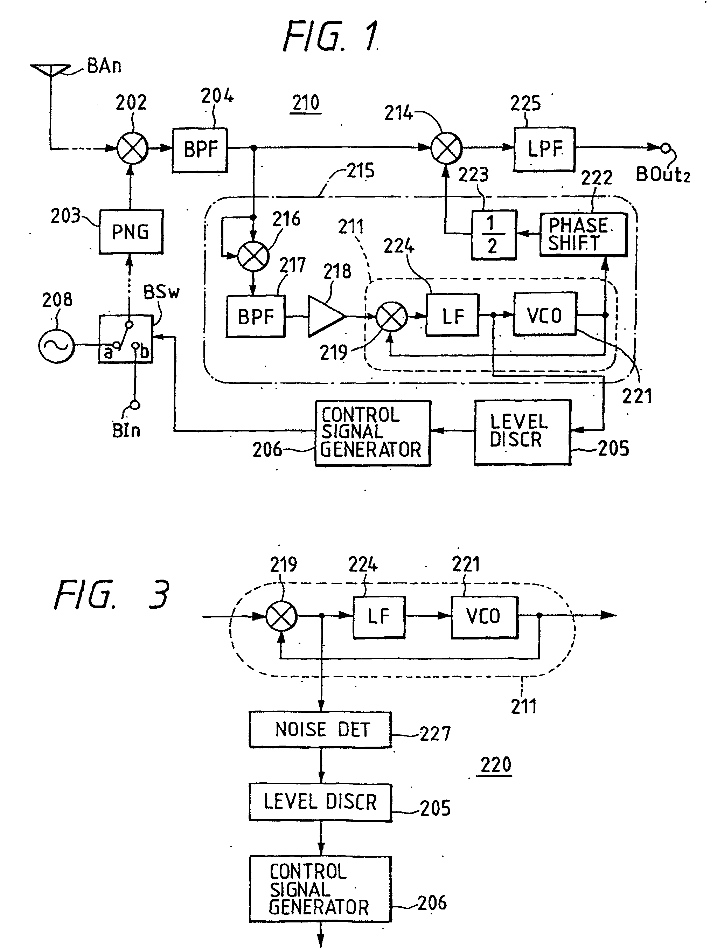

With reference to Fig. 1, a spread spectrum receiver or a spread spectrum demodulating apparatus 210 includes an antenna BAn, a multiplier (mixer) 202, a pseudonoise generator (spread code generator) 203, a band pass filter 204, a level discriminator 205, a control signal generator 206, a switch BSw, an oscillator 208, a multiplier (mixer) 214, a carrier reproducing circuit 215, and a low pass filter 225.

The carrier reproducing circuit 215 includes a multiplier (mixer) 216, a band pass filter 217, a limiter amplifier 218, a multiplier (mixer) 219, a voltage-controlled oscillator 221, a phase shifter 222, and a frequency divider 223, and a loop filter 224. The multiplier 219, the loop filter 224, and the oscillator 221 compose a PLL circuit 211.

The antenna BAn leads to a first input terminal of the multiplier 202. The output terminal of the pseudonoise generator 203 is connected to a second input terminal of the multiplier 202. The output terminal of the multiplier 202 is connected to the input terminal of the band pass filter 204. The output terminal of the band pass filter 204 is connected to a first input terminal of the multiplier 214. The output terminal of the multiplier 214 is connected to the input terminal of the low pass filter 225. The output terminal of the low pass filter 225 leads to an apparatus output terminal BOut2.

The output terminal of the level discriminator 205 is connected to the input terminal of the control signal generator 206. The output terminal of the control signal generator 206 is connected to a control terminal of the switch BSw.

The switch BSw has a movable contact and two fixed contacts "a" and "b". The movable contact of the switch BSw connects with either the fixed contact "a" or the fixed contact "b" thereof. The movable contact of the switch BSw is followed by the clock input terminal of the pseudonoise generator 203. The fixed contact "a" of the switch BSw is connected to the output terminal of the oscillator 208. The fixed contact "b" of the switch BSw is connected to an apparatus input terminal BIn 1.

The output terminal of the band pass filter 204 is connected to first and second input terminals of the multiplier 216. The output terminal of the multiplier 216 is connected to a first input terminal of the multiplier 219 via the band pass filter 217 and the limiter amplifier 218. The output terminal of the multiplier 219 is connected to the input terminal of the loop filter 224. The output terminal of the loop filter 224 is connected to the control terminal of the oscillator 221. The output terminal of the loop filter 224 is also connected to the input terminal of the level discriminator 205. The output terminal of the oscillator 221 is connected to the input terminal of the phase shifter 222. The output terminal of the oscillator 221 is also connected to a second input terminal of the multiplier 219. The output terminal of the phase shifter 222 is connected to the input terminal of the frequency divider 223. The output terminal of the frequency divider is connected to a second input terminal of the multiplier 214.

An incoming spread spectrum signal caught by the antenna BAn is fed to the mixer 202 via a band pass filter (not shown). The incoming spread spectrum signal is expressed as "A•P(t)•d(t)•cosωt", where "A" denotes the amplitude; "P(t)" denotes a spread code signal; "d(t)" denotes an information signal; and "cosωt" denotes a carrier. The information signal "d(t)" is of the bi-value type which can be changed between "+1" and "-1". During an initial stage of operation of the demodulating apparatus 210, the movable contact of the switch BSw connects with the fixed contact "a" thereof so that the output signal of the oscillator 208 is fed to the pseudonoise generator 203 via the switch *BSw* as a clock signal. The oscillator 208 is preferably designed so that its oscillation frequency continuously varies between predetermined upper and lower limits. The pseudonoise generator 203 produces a signal representative of a spread code in response to the clock signal. The spread code signal is fed from the pseudonoise generator 203 to the multiplier 202. The spread code signal is expressed as "P(t-τ)" where "τ" denotes a phase difference or a time offset relative to the spread code signal "P(t)" in the incoming spread spectrum signal.

The multiplier 202 despreads the incoming spread spectrum signal in response to the spread code signal "P(t-τ)", thereby outputting a despread demodulation signal (recovered primary modulation signal) expressed as "A•P(t)•P(t-τ)•d(t)•cosωt". When the phase difference "τ" is null, the despread demodulation signal is expressed as "A•d(t)•cosωt". It should be noted that $P(t)^2=1$. The despread demodulation signal is fed from the multiplier 202 to the first and second input terminals of the multiplier 216 via the band pass filter 204.

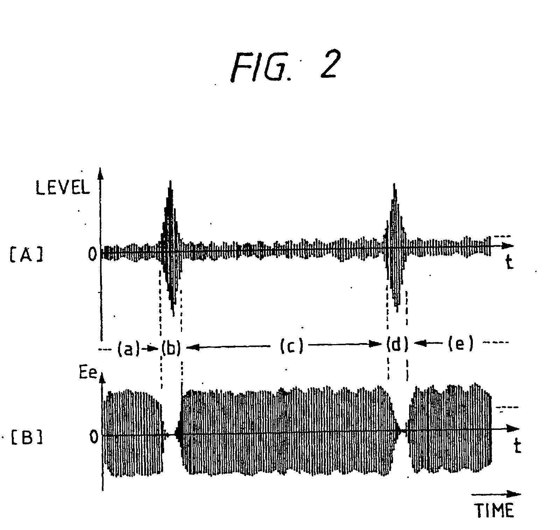

The band pass filter 204 is tuned to the frequency of the carrier "cosωt". The output signal of the band pass filter 204 has a waveform such as shown in the part [A] of Fig. 2. In Fig. 2, "(b)" and "(d)" denote correlation points at which a good agreement occurs in spread code signal between a transmitter side and the receiver side (the demodulating apparatus side). At the correlation points "(b)" and "(d)", the output signal of the multiplier 202 is lean in spread spectrum components, and the output signal of the multiplier 202 passes through the band pass filter 204 without receiving a significant loss. In Fig. 2, "(a)", "(c)", and "(e)" denote noncorrelation intervals during which a disagreement occurs in spread code signal between the transmitter side and the receiver side. During the noncorrelation intervals "(a)", "(c)", and "(e)", the output signal of the multiplier 202 is rich in spread spectrum components, and the output signal of the multiplier 202 passes through the band pass filter 204 with receiving a significant loss. Therefore, a large level difference is present between a correlation point and a noncorrelation interval.

As previously described, the despread demodulation signal is fed from the multiplier 202 to the first and second input terminals of the multiplier 216 via the band pass filter 204. The multiplier 216 serves as a frequency doubler which doubles the frequency of the output signal of the band pass filter 204. The output signal of the multiplier 216 is fed to the multiplier 219 via the band pass filter 217 and the limiter amplifier 218. The band pass filter 217 is tuned to twice the frequency of the carrier "cosωt". The output signal of the band pass filter 217 is expressed as "(1/2)•$A^2$•cos2ωt".

The output signal of the band pass filter 217 is subjected to amplification and amplitude limitation by the limiter amplifier 218. The output signal of the limiter amplifier 218 is fed to the multiplier 219. The output signal of the oscillator 221 is fed to the multiplier 219. The multiplier 219 serves as a phase comparator. The multiplier 219 compares the phase of the output signal of the limiter amplifier 218 and the phase of the output signal of the oscillator 221 to derive an error (phase error) therebetween. The output signal of the multiplier 219 is applied to the loop filter 224 so that high-frequency components of the output signal of the multiplier 219 are removed thereby. Thus, the output signal of the multiplier 219 is processed by the loop filter 224 into a phase comparison signal (phase error signal) having a waveform such as shown in the part [B] of Fig. 2. The phase comparison signal is fed from the loop filter 224 to the oscillator 221 as a control signal so that the frequency of oscillation of the oscillator 221 depends on the phase comparison signal. Thus, the frequency of the output signal of the oscillator 221 follows the frequency of the output signal of the limiter amplifier 218 according to the function of the PLL circuit 211.

As shown in Fig. 2 the level of the phase comparison signal (phase error signal) outputted from the loop filter 224 is minimized at the correlation points "(b)" and "(d)". The level discriminator 205 receives the output signal of the loop filter 224, and senses the minimization of the level of the phase comparison signal to detect the correlation points "(b)" and "(d)".

A clock signal generator (not shown) reproduces a clock signal in response to, for example, the output signal of the oscillator 221 or the frequency divider 223. The reproduced clock signal is fed to the fixed contact "b" of the switch BSw via the apparatus input terminal BIn1. At the correlation points "(b)" and "(d)", the reproduced clock signal is the same as a clock signal for a pseudonoise signal in the transmitter side.

The PLL circuit 215 serves as an FM demodulator. At the correlation points "(b)" and "(d)" in Fig. 14, the spread component level (spread noise level) is low and the carrier level is high so that a high C/N (carrier-to-noise) ratio occurs. During the noncorrelation intervals "(a)", "(c)", and "(e)" in Fig. 2, the spread component level (spread nose level) is high and the carrier level is small so that a low C/N ratio occurs. It is well-known in the art that the S/N (signal-to-noise) ratio of a recovered signal which results from FM demodulation of a modulation signal is remarkably higher than the C/N ratio of the modulation signal. Since the PLL circuit 215 serves as an FM demodulator, the level discriminator 205 detects a correlation point with adequate accuracy and reliability.

The level discriminator 205 informs the control signal generator 206 of the detection of the correlation point. The control signal generator 206 includes a flip-flop or a combination of a switch and a dc power source which generates a binary signal. The binary signal changes in logic state when the control signal generator 206 is informed of the detection of the correlation point. The control signal generator 206 outputs the binary signal to the switch BSw as a switch change signal. When the binary signal changes in logic state as previously described, the movable contact of the switch BSw connects with the fixed contact "b" thereof so that the reproduced clock signal same as the transmitter-side clock signal starts to be fed to the pseudonoise generator 203 via the switch BSw as a clock signal. Accordingly, the pseudonoise generator 203 starts to produce the spread code signal in response to the correct clock signal. In this way, there occurs the establishment of a good synchronization (agreement) in spread code signal between the transmitter and the receiver 210. During a later time, the synchronization (agreement) in spread code signal remains maintained.

The level of the output signal of the band pass filter 204 depends on the intensity of the incoming spread code signal. The limiter amplifier 218 serves to hold essentially constant the level of the signal inputted into the PLL circuit 211 independent of a level change in the output signal of the band pass filter 204. This design ensures that the spread noise level of the phase error signal outputted by the loop filter 224 remains substantially independent of a variation in the intensity of the incoming spread code signal. Accordingly, the level discriminator 205 is enabled to accurately detect a correlation point.

The phase shifter 222 receives the output signal of the oscillator 221. After the establishment of the synchronization (agreement) in spread code signal between the transmitter and the receiver 210, the phase of the output signal of the oscillator 221 differs from the phase of the signal inputted into the carrier reproducing circuit 215 (the output signal of the band pass filter 204) by $\pi/2$. The phase shifter 222 compensates for this phase difference. The frequency divider 223 receives the output signal of the phase shifter 222 and halves the frequency of the output signal of the phase shifter 222, thereby reproducing a carrier "$\cos\omega t$". The reproduced carrier is applied from the frequency divider 223 to the multiplier 214. The multiplier 214 compares the phase of the output signal (recovered primary modulation signal) of the band pass filter 204 and the phase of the reproduced carrier. thereby demodulating the primary modulation signal into an original information signal "d(t)" with unnecessary high-frequency components. The output signal of the multiplier 214 is fed to the low pass filter 225 so that the unnecessary high-frequency components thereof are removed by the low pass filter 225. Thus, the low pass filter 225 recovers the original information signal "d(t)". The recovered original information signal "d(t)" is applied from the low pass filter 225 to the apparatus output terminal BOut2. It should be noted that the low pass filter 225 may be omitted.

Second Embodiment

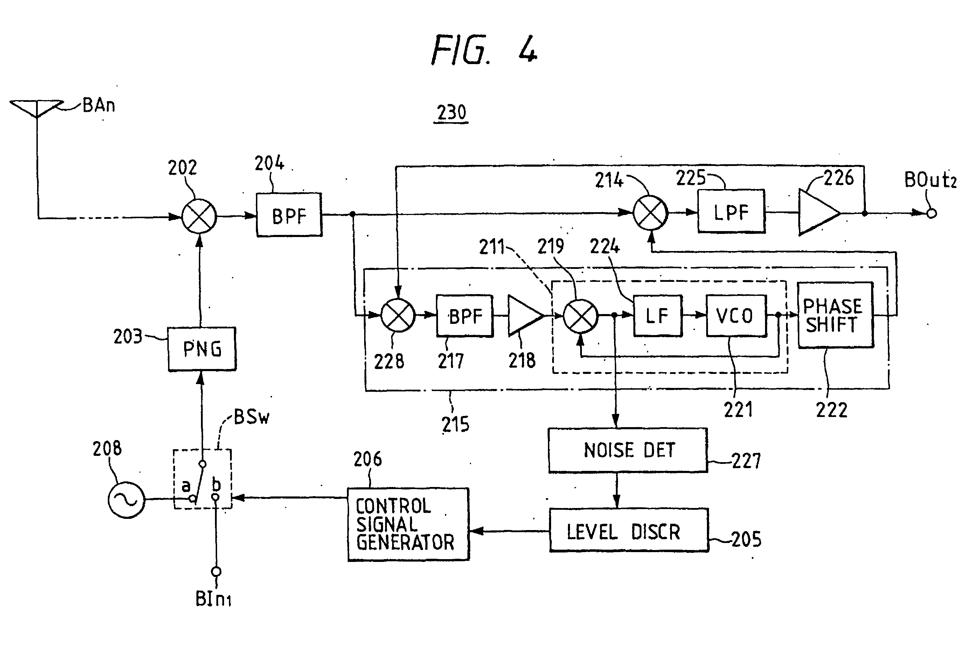

Fig. 3 shows a spread signal demodulating apparatus 220 which is similar to the demodulating apparatus 210 of Fig. 1 except that a noise detector 227 is additionally provided. The input terminal of the noise detector 227 follows the output terminal of a multiplier 219. The output terminal of the noise detector 227 is connected to the input terminal of a level discriminator 205.

The noise detector 227 includes a low pass filter and a sensing section. The low pass filter in the noise detector 227 removes input-signal components having frequencies higher than a carrier frequency "$\omega$". The sensing section in the noise detector 227 detects the level of the output signal of the low pass filter therein. The level discriminator 205 responds to the output signal of the sensing section in the noise detector 227.

Since the noise detector 227 responds to the signal which appears at the output side of the multiplier 219 but the input side of the loop filter 224, a correlation point can be detected even when a PLL circuit 211 moves out of locked conditions.

Third Embodiment

With reference to Fig. 4, a spread spectrum receiver or a spread spectrum demodulating apparatus 230 includes an antenna BAn, a multiplier (mixer) 202, a pseudonoise generator (spread . code generator) 203, a band pass filter 204, a level discriminator 205, a control signal generator 206, a switch BSw, an oscillator 208, a multiplier (mixer) 214, a carrier reproducing circuit 215, a low pass filter 225, an amplifier 226, and a noise detector 227.

The carrier reproducing circuit 215 includes a band pass filter 217, a limiter amplifier 218, a multiplier (mixer) 219, a voltage-controlled oscillator 221, a phase shifter 222, a loop filter 224, and a multiplier (mixer) 228. The multiplier 219, the loop filter 224, and the oscillator 221 compose a PLL circuit 211.

The antenna BAn leads to a first input terminal of the multiplier 202. The output terminal of the pseudonoise generator 203 is connected to a second input terminal of the multiplier 202. The output terminal of the multiplier 202 is connected to the input terminal of the band pass filter 204. The output terminal of the band pass filter 204 is connected to a first input terminal of the multiplier 214 and also a first input terminal of the multiplier 228. The output terminal of the multiplier 214 is connected to the input terminal of the low pass filter 225. The output terminal of the low pass filter 225 is connected to the input terminal of the amplifier 226. The output terminal of the amplifier 226 leads to an apparatus output terminal BOut2. The output terminal of the amplifier 226 is also connected to a second input terminal of the multiplier 228.

The output terminal of the noise detector 227 is connected to the input terminal of the level discriminator 205. The output terminal of the level .discriminator 205 is connected to the input terminal of the control signal generator 206. The output terminal of the control signal generator 206 is connected to a control terminal of the switch BSw.

The switch BSw has a movable contact and two fixed contacts "a" and "b". The movable contact of the switch BSw connects with either the fixed contact "a" or the fixed contact "b" thereof. The movable contact of the switch BSw is followed by the clock input terminal of the pseudonoise generator 203. The fixed contact "a" of the switch BSw is connected to the output terminal of the oscillator 208. The fixed contact "b" of the switch BSw is connected to an apparatus input terminal BIn1.

The output terminal of the multiplier 228 is connected to a first input terminal of the multiplier 219 via the band pass filter 217 and the limiter amplifier 218. The output terminal of the multiplier 219 is connected to the input terminal of the loop filter 224 and also the input terminal of the noise detector 227. The output terminal of the loop filter 224 is connected to the control terminal of the oscillator 221. The output terminal of the oscillator 221 is connected to the input terminal of the phase shifter 222. The output terminal of the oscillator 221 is also connected to a second input terminal of the multiplier 219. The output terminal of the phase shifter 222 is connected to a second input terminal of the multiplier 214.

An incoming spread spectrum signal caught by the antenna BAn is fed to the mixer 202 via a band pass filter (not shown). The incoming spread spectrum signal is expressed as "$A1 \cdot P(t) \cdot d(t) \cdot \cos \omega t$". where "A1" denotes the amplitude; "$P(t)$" denotes a spread code signal; "$d(t)$" denotes an information signal; and "$\cos \omega t$" denotes a carrier. The information signal "$d(t)$" is of the bi-value type which can be changed between "+1" and "-1". During an initial stage of operation of the demodulating apparatus 230, the movable contact of the switch BSw connects with the fixed contact "a" thereof so that the output signal of the oscillator 208 is fed to the pseudonoise generator 203 via the switch BSw as a clock signal. The oscillator 208 is preferably designed so that its oscillation frequency continuously varies between predetermined upper and lower limits. The pseudonoise generator 203 produces a signal representative of a spread code in response to the clock signal. The spread code signal is fed from the pseudonoise generator 203 to the multiplier 202. The spread code signal is expressed as "$P(t-\tau)$" where "$\tau$" denotes a phase difference or a time offset relative to the spread code signal "$P(t)$" in the incoming spread spectrum signal.

The multiplier 202 despreads the incoming spread spectrum signal in response to the spread code signal "$P(t-\tau)$", thereby outputting a despread demodulation signal (recovered primary modulation signal) expressed as "$A1 \cdot P(t) \cdot P(t-\tau) \cdot d(t) \cdot \cos \omega t$". When the phase difference "$\tau$" is null, the despread demodulation signal is expressed as "$A1 \cdot d(t) \cdot \cos \omega t$". It should be noted that $P(t)^2=1$. The despread demodulation signal is fed from the multiplier 202 to the multipliers 214 and 228 via the band pass filter 204.

The band pass filter 204 is tuned to the frequency of the carrier "$\cos \omega t$". The output signal of the band pass filter 204 has a waveform such as shown in the part [A] of Fig. 2. At correlation points "(b)" and "(d)" in Fig. 2, a recovered information signal "$d(t)$" is fed to the multiplier 228 via the amplifier 226. The device 228 multiplies the despread demodulation signal "$A1 \cdot d(t) \cdot \cos \omega t$" and the recovered information signal "$d(t)$", thereby outputting a signal expressed as "$A1 \cdot \cos \omega t$" if signal delays caused by devices including the low pass filter 225 are not taken into consideration. It should be noted that $d(t)^2=1$. The output signal of the multiplier 228 is fed to the band pass filter 217, and is processed thereby. The band pass filter 217 is tuned to the frequency of the carrier "$\cos \omega t$" so that a reproduced carrier "$A1 \cdot \cos \omega t$" appears at the output terminal of the band pass filter 217. The reproduced carrier is fed from the band pass filter 217 to the multiplier 219 in the PLL circuit 211 via the limiter amplifier 218. The limiter amplifier 218 serves to limit the amplitude of the reproduced carrier. The PLL circuit 211 serves as a narrow-band tracking filter so that a good reproduced carrier essentially free from jitter components appears at the output terminal of the oscillator 221.

During noncorrelation intervals "(a)", "(c)", and "(e)", the signal inputted into the PLL circuit 211 is rich in spread spectrum components, which cause jitter components of a reproduced carrier appearing at the output terminal of the oscillator 221. The multiplier 219 compares the phase of the output signal of the oscillator 221 and the output signal of the limiter amplifier 218, thereby outputting a phase error signal with a waveform such as shown in the part [B] of Fig. 2. There is a large difference in spread noise level of the phase error signal between a correlation point and a noncorrelation point. Specifically, the spread noise level at the correlation point is remarkably smaller than the spread noise level during the noncorrelation interval. Thus, the spread noise level decreases when the noncorrelation interval is replaced by the correlation point.

The noise detector 227 senses spread noise components of the output signal (phase error signal) of the multiplier 219, and outputs a signal with a level depending on the level of the sensed spread noise components. The level discriminator 205 receives the output signal of the noise detector 227, and senses a decrease in the spread noise level of the phase comparison signal to detect a correlation point.

A clock signal generator (not shown) reproduces a clock signal in response to, for example, the output signal of the oscillator 221 or the phase shifter 222. The reproduced clock signal is fed to the fixed contact "b" of the switch BSw via the apparatus input terminal BIn1. At the correlation points "(b)" and "(d)" in Fig. 2. the reproduced clock signal is the same as a clock signal for a pseudonoise signal in the transmitter side.

The level discriminator 205 informs the control signal generator 206 of the detection of the correlation point. The control signal generator 206 includes a flip-flop or a combination of a switch and a dc power source which generates a binary signal. The binary signal changes in logic state when the control signal generator 206 is informed of the detection of the correlation point. The control signal generator 206 outputs the binary signal to the switch BSw as a switch change signal. When the binary signal changes in logic state as previously described, the movable contact of the switch BSw connects with the fixed contact "b" thereof so that the reproduced clock signal same as the transmitter-side clock signal starts to be fed to the pseudonoise generator 203 via the switch BSw as a clock signal. Accordingly, the pseudonoise generator 203 starts to produce the spread code signal in response to the correct clock signal. In this way, there occurs the establishment of a good synchronization (agreement) in spread code signal between the transmitter and the receiver 230. During a later time, the synchronization (agreement) in spread code signal remains maintained.

The level of the output signal of the band pass filter 204 depends on the intensity of the incoming spread code signal. The limiter amplifier 218 serves to hold essentially constant the level of the signal inputted into the PLL circuit 211 independent of a level change in the output signal of the band pass filter 204. This design ensures that the spread noise level of the phase error signal outputted by the loop filter 224 remains substantially independent of a variation in the intensity of the incoming spread code signal. The limiter amplifier 218 serves as an AGC circuit which enables a dynamic range of about 130 dB.

The phase shifter 222 receives the output signal of the oscillator 221. After the establishment of the synchronization (agreement) in spread code signal between the transmitter and the receiver 230, the phase of the output signal of the oscillator 221 differs from the phase of the signal inputted into the carrier reproducing circuit 215 (the output signal of the band pass filter 204) by $\pi/2$. The phase shifter 222 compensates for this phase difference, thereby reproducing a carrier "A2•cosωt" where "A2" denotes the amplitude. The reproduced carrier is applied from the phase shifter 222 to the multiplier 214. The multiplier 214 executes synchronous demodulation. The device 214 multiplies the output signal (recovered primary modulation signal) "A1•d(t)•cosωt" of the band pass filter 204 and the reproduced carrier "A2•cosωt", thereby outputting a signal expressed as "(A1•A2/2)•d(t)•(1+cos2ωt)". The output signal of the multiplier 214 is fed to the low pass filter 225. High-frequency components of the output signal of the multiplier 214 are removed by the low pass filter 225 so that a recovered information signal expressed as "(A1•A2/2)•d(t)" appears at the output terminal of the low pass filter 225. The recovered information signal is fed from the low pass filter 225 to the amplifier 226. The amplifier 226 serves as a waveshaper or a voltage comparator which converts the recovered information signal into a second recovered information signal expressed as "A3•d(t)", where "A3" denotes the amplitude which is substantially independent of the amplitude A1 of the incoming spread spectrum signal. The second recovered information signal is applied from the amplifier 226 to the apparatus output terminal BOut2. As previously described, the second recovered information signal is also fed from the amplifier 226 to the multiplier 228.

Fourth Embodiment

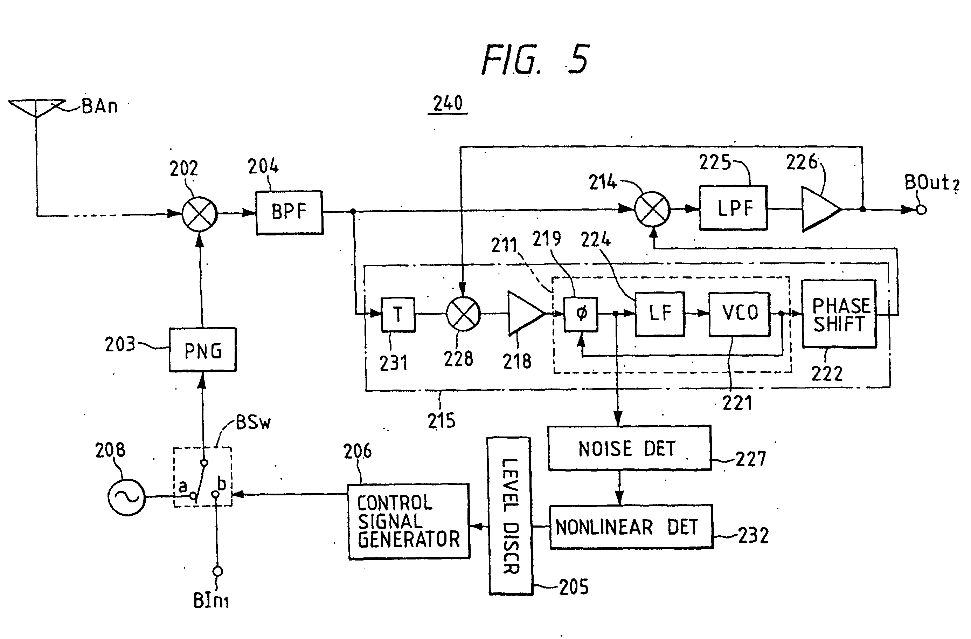

Fig. 5 shows a spread spectrum demodulating apparatus (spread spectrum receiver) 240 which is similar to the demodulating apparatus 230 of Fig. 4 except that a delay circuit 231 and a nonlinear detector 232 are additionally provided. As shown in Fig. 5, the delay circuit 231 is interposed between a band pass filter 204 and a multiplier 228. The nonlinear detector 232 is interposed between a noise detector 227 and a level discriminator 205.

A recovered information signal fed to the multiplier 228 from an amplifier 226 has a phase delay (time delay) "T" relative to the output signal of the band pass filter 204 which is caused by devices including a low pass filter 25. The recovered information signal fed to the multiplier 228 is thus expressed as "d(t-T)". The delay circuit 231 delays the output signal of the band pass filter 204 by a predetermined time equal to the delay time "T", thereby compensating for the phase difference between the two signals inputted into the multiplier 228. The delay circuit 231 outputs the delay-resultant signal to the multiplier 228.

The nonlinear detector 232 is designed to enable the level discriminator 205 to discriminate between a correlation point and a noncorrelation interval with increased accuracy and reliability.

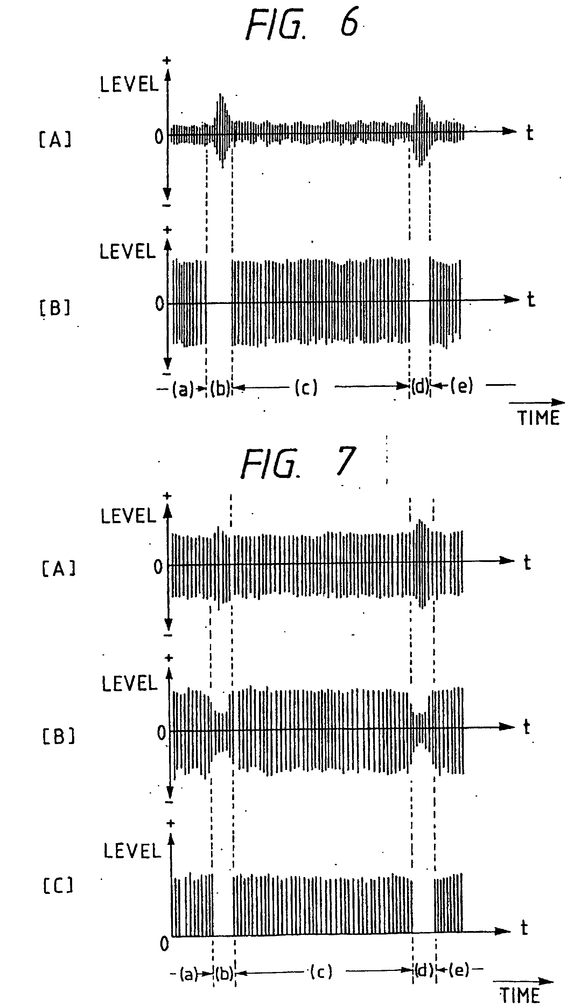

The output signal of the band pass filter 204 has a waveform such as shown in the part [A] of Fig. 6. When the waveform of the output signal of the band pass filter 204 agrees with the waveform of the part [A] of Fig. 6 the output signal of the noise detector 227 has a waveform such as shown in the part [B] of Fig. 6. In Fig. 6. "(b)" and "(d)" denote correlation points at which the spread noise level of the output signal of the noise detector 227 is minimized. In Fig. 6. "(a)", "(c)", and "(e)" denote noncorrelation intervals during which the spread noise level of the output signal of the noise detector 227 is relatively high.

The part [A] of Fig. 7 shows a waveform of the output signal of the band pass filter 204 which occurs under poor receiving conditions. When the waveform of the output signal of the band pass filter 204 agrees with the waveform of the part [A] of Fig. 7. the output signal of the noise detector 227 has a waveform such as shown in the part [B] of Fig. 7. In this case, the output signal of the nonlinear detector 232 has a waveform such as shown in the part [C] of Fig. 7. In Fig. 7, "(b)" and "(d)" denote correlation points at which the spread noise level of the output signal of the noise detector 227 is minimized. In Fig. 7, "(a)", "(c)", and "(e)" denote noncorrelation intervals during which the spread noise level of the output signal of the noise detector 227 is relatively high.

A multiplier 202 receives an incoming spread spectrum signal "A1•P(t)•d(t)•cosωt" from an antenna BAn. Also, the multiplier 202 receives a spread code signal "P(t-τ)" from a pseudonoise generator (spread code generator) 203. The multiplier 202 despreads the incoming spread spectrum signal in response to the spread code signal, thereby outputting a despread demodulation signal (recovered primary modulation signal) expressed as "A1•P(t)•P(t-τ)•d(t)•cosωt". The despread demodulation signal is fed from the multiplier 202 to a multiplier 214 and a carrier reproducing circuit 215 via the band pass filter 204.

At correlation points "(b)" and "(d)" in Figs. 6 and 7 where the phase difference "τ" is null, the despread demodulation signal is expressed as "A1•d(t)•cosωt" It should be noted that P(t)$^2$=1. The delay circuit 231 delays the despread demodulation signal, and thereby outputs a delay-resultant signal expressed as "A1•d(t-T)•cos(ωt-ωT)". The multiplier 228 receives the output signal of the delay circuit 231. The multiplier 228 receives a recovered information signal "d(t-T)" from an amplifier 226. The device 228 multiplies the delay-resultant despread demodulation signal "A1•d(t-T)•cos(ωt-ωT)" and the recovered information signal "d(t-T)", thereby outputting a signal expressed as "A1•cos(ωt-ωT)". It should be noted that d(t-T)$^2$=1.

During noncorrelation intervals "(a)", "(c)", and "(e)" in Figs. 6 and 7, a voltage-controlled oscillator 221 outputs a carrier rich in jitter components. A phase error signal outputted from a phase comparator 219 is fed to the noise detector 227. The noise detector 227 senses spread noise components of the phase error signal, and outputs a signal having a waveform such as shown in the part [B] of each of Figs. 6 and 7. The output signal of the noise detector 227 is fed to the nonlinear detector 232. As shown in the part [C] of Fig. 7, the nonlinear detector 232 expands or enlarges a spread noise level variation (difference) in the output signal of the noise detector 227. The level discriminator 205 receives the output signal of the nonlinear detector 232, and discriminates the spread noise level of the received signal to detect a correlation point.

The level discriminator 205 informs a control signal generator 206 of the detection of the correlation point. The control signal generator 206 changes a switch BSw in response to the detection of the correlation point so that a reproduced clock signal same as a transmitter-side clock signal starts to be fed from a clock signal generator (not shown) to a pseudonoise generator 203 via the switch BSw as a clock signal. Accordingly, the pseudonoise generator 203 starts to produce the spread code signal in response to the correct clock signal. In this way, there occurs the establishment of a good synchronization (agreement) in spread code signal between the transmitter and the receiver 240. During a later time, the synchronization (agreement) in spread code signal remains maintained.

A phase shifter 222 receives the output signal of the oscillator 221. After the establishment of the synchronization (agreement) in spread code signal between the transmitter and the receiver 240, the phase of the output signal "A2•cos(ωt-ωT-θ)" of the oscillator 221 differs from the phase of the carrier "A1•cosωt" in the signal inputted into the carrier reproducing circuit 215 (the output signal of the band pass filter 204). The phase shifter 222 compensates for this phase difference, thereby reproducing a carrier "A2•cosωt" where "A2" denotes the amplitude. It should be noted that "θ" denotes the phase of a carrier fed to the phase comparator 219 during basic operation of a PLL circuit 211. The reproduced carrier is applied from the phase shifter 222 to a multiplier 214. The multiplier 214 executes synchronous demodulation. The device 214 multiplies the output signal (primary modulation signal) "A1•d(t)•cosωt" of the band pass filter 204 and the reproduced carrier "A2•cosωt", thereby outputting a signal expressed as "(A1•A2/2)•d(t)•(1+cos2ωt)". The output signal of the multiplier 214 is fed to the low pass filter 225. Carrier components of the output signal of the multiplier 214 are removed by the low pass filter 225. The output signal of the low pass filter 225 is applied to the amplifier 226, and is subjected to waveshaping thereby. The amplifier 226 outputs a recovered information signal "d(t-T)" which has been affected by the phase delay "T". The recovered information signal is applied from the amplifier 226 to an apparatus output terminal BOut2.

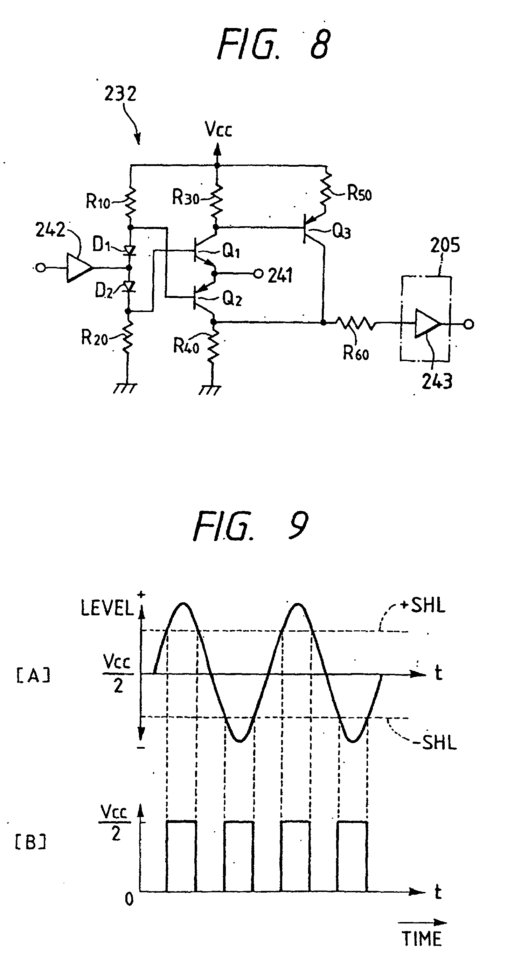

As shown in Fig. 8, the nonlinear detector 231 includes resistors R10, R20, R30, R40, R50. and R60, diodes D1 and D2, transistors Q1, Q2, and Q3, and an amplifier 242. A series combination of the resistor R10, the diode D1, the diode D2, and the resistor R20 is connected between a power supply line and the ground. The power supply line is subjected to a predetermined positive voltage Vcc. The input terminal of the amplifier 242 is connected to the output terminal of the noise detector 227 (see Fig. 5. The output terminal of the amplifier 242 is connected to the junction between the diodes D1 and D2. A series combination of the resistor R30, the collector-emitter path of the transistor Q1, the emitter-collector path of the transistor Q2, and the resistor R40 is connected to the power supply line and the ground. The base of the transistor Q1 is connected to the junction between the diode D2 and the resistor R20. The base of the transistor Q2 is connected to the junction between the resistor R10 and the diode D1. The emitter of the transistor Q3 is connected to the power supply line via the resistor R50. The base of the transistor Q3 is connected to the junction between the resistor R30 and the transistor Q1. The collector of the transistor Q3 is connected to the junction between the transistor Q2 and the resistor R40. The collector of the transistor Q3 is connected to an input amplifier 243 of the level discriminator 205 via the resistor R60. The junction between the transistors Q1 and Q2 leads to a terminal 241 subjected to a predetermined positive voltage having a level of Vcc/2.

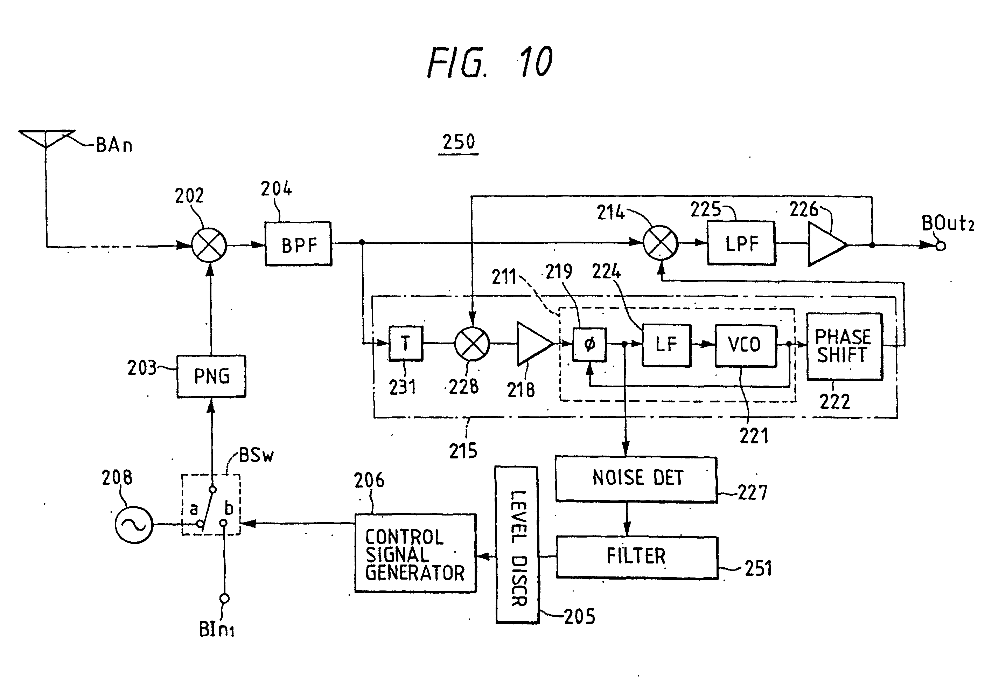

The amplifier 242 is subjected to a dc voltage having a level of Vcc/2. The resistances of the resistors R10 and R20 have a relation as "R10=R20". The diodes D1 and D2 are equal in characteristics. The resistances of the resistors R30 and R40 have a relation as "R30=R40". The transistors Q1 and Q2 are complementary with each other. The resistances of the resistors R40, R50, and R60 are set in a relation as "R50=R40//R60 (parallel connection)" to equalize signal levels applied to the amplifier 243 within the level discriminator 205 which correspond to a positive-polarity signal and a negative-polarity signal exceeding threshold levels +SHL and -SHL (see Fig. 9) respectively. This design enables the positive-polarity signal level and the negative-polarity signal level to balance with each other. The amplifier 243 within the level discriminator 205 has a predetermined small input resistance.

Each of the transistors Q1 and Q2 serves as a switch changeable between an on state (conductive state) and an off state (nonconductive state). Specifically, the transistor Q1 assumes the on state when the base voltage of the transistor Q1 increases above the voltage Vcc/2 by higher than a positive threshold level +SHL equal to the sum of the base-emitter voltage of the transistor Q1 and the normal-direction voltage of the diode D2. Otherwise, the transistor Q1 assumes the off state. On the other hand, the transistor Q2 assumes the on state when the base voltage of the transistor Q2 decreases below the voltage Vcc/2 by higher than a negative threshold level -SHL equal to the sum of the base-emitter voltage of the transistor Q2 and the normal-direction voltage of the diode D2. Otherwise, the transistor Q2 assumes the off state. The transistors Q1 and Q3 compose a phase inverter. When the transistor Q1 changes to the on state, the collector voltage of the transistor Q1 drops from the level Vcc to the level Vcc/2 so that the transistor Q3 generates a collector output voltage equal to a level of Vcc/2. When the transistor Q2 changes to the on state, the transistor Q2 generates a collector output voltage equal to a level of Vcc/2.

It is now assumed that the output signal of the amplifier 242 has a waveform shown in the part [A] of Fig. 9. In this case. the output signal of the nonlinear detector 232 which appears at the junction among the transistors Q2 and Q3 and the resistor R60 has a waveform shown in the part [B] of Fig. 9. When the output signal of the amplifier 242 is higher than the positive threshold level +SHL or lower than the negative threshold level -SHL, a major portion of the nonlinear detector 232 is in a conductive state so that the voltage Vcc/2 is transmitted as an output signal of the nonlinear detector 232. When the output signal of the amplifier 242 is present between the positive threshold level +SHL and the negative threshold level -SHL, the output signal of the nonlinear detector 232 has a level of 0 volt. As shown in the parts [A] and [B] of Fig. 9, the output signal of the amplifier 242 is shaped into equal-height pulses while the output signal of the nonlinear detector 232 which has a level smaller than the level Vcc/2 is folded back or inverted. Thus, the output signal of the nonlinear detector 232 agrees with a signal resulting from substantially full-wave detection.

The output signal of the nonlinear detector 232 is fed to the level discriminator 205, being converted into a bi-level signal (binary signal) thereby. The bi-level signal is outputted from the nonlinear detector 232 to a control signal generator 206 (see Fig. 5). As previously described, the control signal generator 206 generates a switch control signal in response to the bi-level signal, and outputs the switch control signal to the switch BSw. When a noncorrelation interval is replaced by a correlation point, the switch BSw is changed by the switch control signal so that a clock signal is fed to the pseudonoise generator 203 via the apparatus input terminal In1 and the switch BSw.

Fifth Embodiment

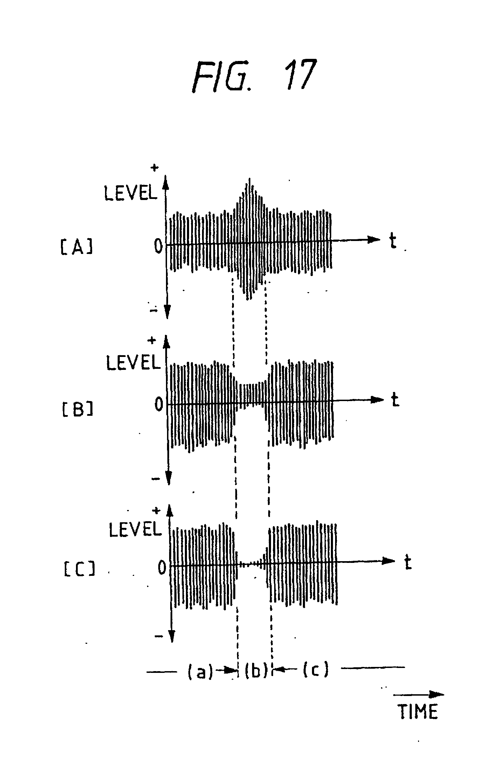

Fig. 10 shows a spread spectrum demodulating apparatus (spread spectrum receiver) 250 which is similar to the demodulating apparatus 240 of Fig. 5 except that the nonlinear detector 232 (see Fig. 17) is replaced by a filter 251.

A multiplier 202 receives an incoming spread spectrum signal "A1•P(t)•d(t)•cos(ωt-θ0)" from an antenna BAn, where "θ0" denotes an initial phase of the carrier. Also, the multiplier 202 receives a spread code signal "P(t-τ)" from a pseudonoise generator (spread code generator) 203. The multiplier 202 despreads the incoming spread spectrum signal in response to the spread code signal, thereby outputting a despread demodulation signal ( recovered primary modulation signal) expressed as "A1•P(t)•P(t-τ)•d(t)•cos(ωt-θ0)". The despread demodulation signal is fed from the multiplier 202 to a multiplier 214 and a carrier reproducing circuit 215 via a band pass filter 204.

At correlation points "(b)" and "(d)" in Figs. 6 and 7 where the phase difference "τ" is null, the despread demodulation signal is expressed as "A1•d(t)•cos(ωt-θ0)". It should be noted that $P(t)^2=1$. The delay circuit 231 delays the despread demodulation signal, and thereby outputs a delay-resultant signal expressed as "A1•d(t-T2)•cos(ωt-ωT2-θ0)" where "T2" denotes a delay time provided by the delay circuit 231. The multiplier 228 receives the output signal of the delay circuit 231. The multiplier 228 receives a recovered information signal "-d(t-T1)" from an amplifier 226, where "T1" denotes a delay time caused by devices including a low pass filter 225. The delay time T2 provided by the delay circuit 231 is set equal to the delay time T1. The device 228 multiplies the delay-resultant despread demodulation signal "A1•d(t-T2)•cos(ωt-ωT2-θ0)" and the recovered information signal "-d(t-T1)", thereby outputting a signal expressed as "-A1•cos(ωt-ωT1-θ0)". It should be noted that $d(t-T1)^2=1$ and T1=T2.

During noncorrelation intervals "(a)", "(c)", and "(e)" in Figs. 6 and 7, a voltage-controlled oscillator 221 outputs a carrier rich in jitter components. A phase error signal outputted from a phase comparator 219 is fed to the noise detector 227. The noise detector 227 senses spread noise components of the phase error signal, and outputs a signal representing the sensed spread noise components. The output signal of the nose detector 227 is fed to the filter 251. As the rate (frequency) of the information signal increases, a difference between the delay times T1 and T2 would more adversely affect level discrimination executed by a level discriminator 205. The filter 251 is designed to remove such an adverse affection.

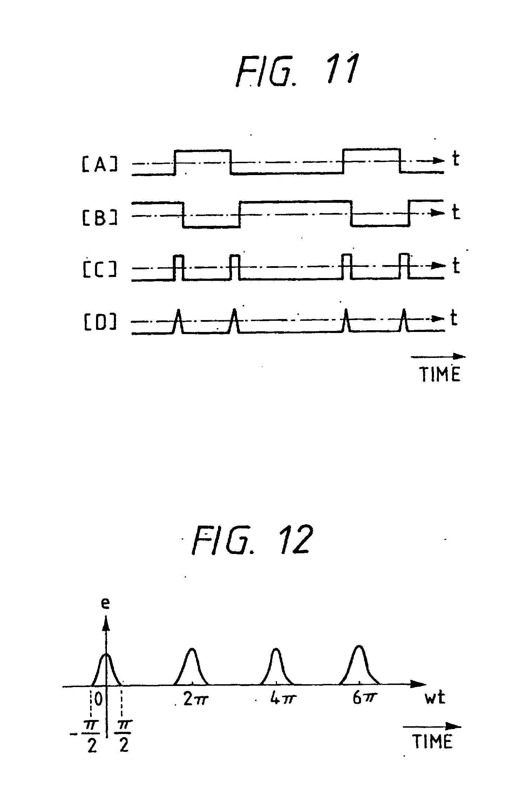

The information signal "d(t-T2)" in the output signal of the delay circuit 231 has a waveform such as shown in the part [A] of Fig. 11. In the case where the delay time T1 slightly differs from the delay time T2, the information signal "-d(t-T1)" outputted from the amplifier 226 has a waveform such as shown in the part [B] of Fig. 11 When the waveforms of the information signals "d(t-T2)" and "-d(t-T1)" agree with those in the parts [A] and [B] of Fig. 11, the output signal "d(t-T2)•-d(t-T1)" of the multiplier 228 has a waveform shown in the part [C] of Fig. 11. In this case, the waveform of the output signal of the multiplier 228 is similar to that of a signal which results from differentiation of the information signal "d(t-T2)" in the output signal of the delay circuit 231. When the waveform of the output signal of the multiplier 228 corresponds to the waveform in the part [C] of Fig. 11, the output signal of the noise detector 227 has a waveform shown in the part [D] of Fig. 11.

As shown in the part [D] of Fig. 11, the output signal of the noise detector 227 contains noise components which have a differentiation-resultant waveform and which are basically unrelated to spread spectrum. As shown in Fig. 12, in the case where the differentiation-resultant components are continuous, the differentiation-noise-related output signal of the noise detector 227 can be approximated to $(\cos\omega t)^2$ when time "$\omega t$" is between "$-\pi/2$" and "$\pi/2$". In addition, the differentiation-noise-related output signal of the noise detector 227 can be approximated to a waveform of zero voltage when time "$\omega t$" is between "$\pi/2$" and "$3\pi/2$". The differentiation-noise-related output signal "e(t)" of the noise detector 227 is expressed by the following expansion.

$$e(t) = \frac{1}{4} + \frac{4}{\pi}[\frac{1}{3}\cos\omega t + \frac{1}{15}\cos 3\omega t - \frac{1}{105}\cos 5\omega t + \cdots$$

$$+ \frac{(-1)^n}{(2n-1)(2n-1)^2-4}\cos(2n-1)\omega t + \cdots] \qquad (15)$$

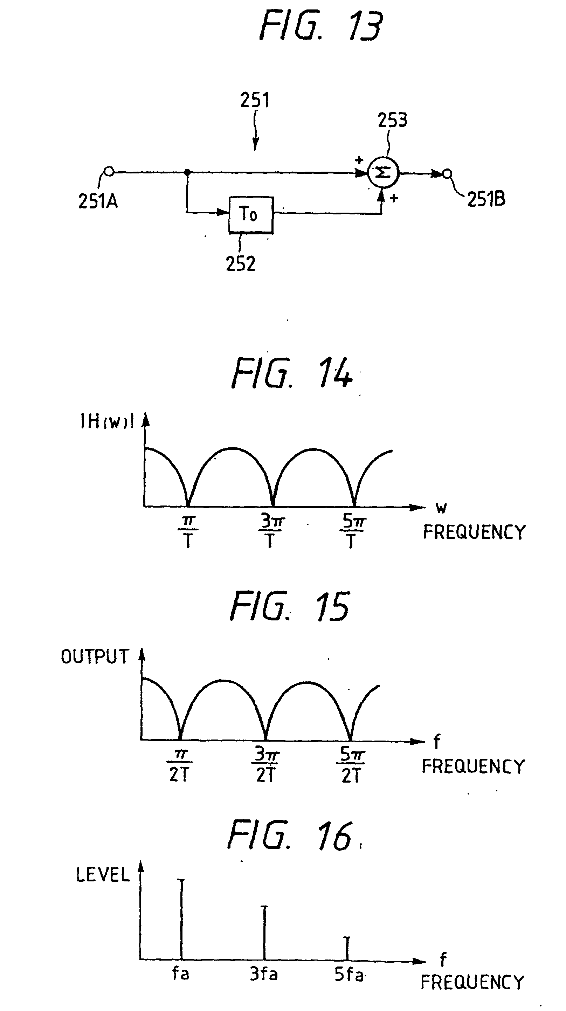

The filter 251 is of the comb type. As shown in Fig. 13, the filter 251 includes a delay circuit 252 and an adder 253. The input terminal 251A of the filter 251 follows the output terminal of the noise detector 227 (see Fig. 10). The input terminal 251A is connected to the input terminal of the delay circuit 252. The input terminal 251A is also connected to a first input terminal of the adder 253. The output terminal of the delay circuit 252 is connected to a second input terminal of the adder 253. The output terminal of the adder 253 leads to the output terminal of the filter 251B which is connected to the level discriminator 205.

An input signal transmitted via the input terminal 251A is fed to the delay circuit 252 and the adder 253. The device 252 delays the input signal by a predetermined time To. The output signal of the delay circuit 252 is fed to the adder 253. The device 253 adds the input signal and the output signal of the delay circuit 252. The output signal of the adder 253 is applied to the output terminal 251B.

It is well-known in the art that the transfer function H($\omega$) of such a comb filter is expressed as follows.

$$|H(\omega)| = 2|\cos(\omega To/2)| \qquad (16)$$

Accordingly, the filter 251 has a response characteristic shown in Fig. 14. Regarding the filter 251, null points are located at angular frequencies $\pi/To$, $3\pi/To$, $5\pi/To$, $\cdots$ as shown in Fig. 14. The frequency response characteristic of the filter 251 is shown in Fig. 15. Fig. 16 diagrammatically shows the spectrum of the differentiation-noise-related output signal "e(t)" of the noise detector 227. In Fig. 16 "fo" denotes the fundamental frequency of the signal "e(t)". The delay time To provided by the delay circuit 252 is chosen so that the fundamental frequency "fa" corresponds to the null-point angular frequency "$\pi/To$". Accordingly, the filter 251 effectively damps differentiation noise components of the output signal of the noise detector 227 while efficiently passing spread noise components thereof.

It is now assumed that the output signal of the band pass filter 204 has a waveform shown in the part [A] of Fig. 17 where "(a)" and "(c)" denote noncorrelation intervals and "(b)" denotes a correlation point. In this case, the output signal of the noise detector 227 has a waveform shown in the part [B] of Fig. 17. At the correlation point "(b)", the output signal of the noise detector 227 tends to be contaminated by the previously-described differentiation noise. The filter 251 removes the differentiation noise from the output signal of the noise detector 227, and thereby makes the output signal of the noise detector 227 into a differentiation-noise-free signal having a waveform shown in the part [C] of Fig. 14. The differentiation-noise-free signal exhibits a clearer level difference between the correlation point "(b)" and the noncorrelation intervals "(a)" and "(c)". The filter 251 outputs the differentiation-noise-free signal to the level discriminator 205. The differentiation noise removal by the filter 251 enables the level discriminator 205 to more. accurately and reliably detect the correlation point "(b)". It should be noted that the comb filter 251 may be replaced by a notch filter.

The output signal "-A1•cos($\omega t-\omega$T1-$\theta$0)" of the multiplier 228 is fed to the phase comparator 219 via a limiter amplifier 218. The oscillator 221 outputs a signal (carrier) "A2•sin(ωt-ωT1-θ1)" to the phase comparator 219, where "θ1" denotes the phase of the carrier fed to the phase comparator 219 which occurs during basic operation of a PLL circuit 211. The device 219 executes phase comparison between the two fed signals, and outputs a resultant phase error signal to a loop filter 224. The loop filter 224 removes high-frequency components from the phase error signal, and thereby converts the phase error signal into a second phase error signal expressed as "E•sin(θ0-θ1)". When the PLL circuit 211 is in a locked state so that the difference between the phases "θ0" and "θ1" is small, the value "E•sin(θ0-θ1)" is approximated to a value of "E•(θ0-θ1)". The second phase error signal is fed from the loop filter 224 to the oscillator 221 as a control signal. The oscillator 221 outputs a signal having a frequency which depends on the second phase error signal. The output signal of the oscillator 221 agrees with a reproduced carrier expressed as

"A2•sin(ωt-ωT1-c1)".

A phase shifter 222 receives the output signal of the oscillator 221. After the establishment of the synchronization (agreement) in spread code signal between a transmitter and the receiver 250, the phase of the output signal "A2•sin(ωt-ωT1-θ1)" of the oscillator 221 differs from the phase of the carrier in the signal inputted into a carrier reproducing circuit 215 (the output signal of the band pass filter 204). The phase shifter 222 compensates for this phase difference, thereby reproducing a carrier "A2•cos(ωt-ωT1-θO)" provided that the phase factors "θ0" and "θ1" are equal. The reproduced carrier is applied from the phase shifter 222 to a multiplier 214. The multiplier 214 executes synchronous demodulation. The device 214 multiplies the output signal (primary modulation signal) of the band pass filter 204 and the reproduced carrier, thereby outputting a signal expressed as "-(A1•A2/2)•d(t)•(1+cos2(ωt-ωT1-θ1))". Thus, the multiplier 214 executes synchronous detection. The output signal of the multiplier 214 is fed to a low pass filter 225. Carrier components of the output signal of the multiplier 214 are removed by the low pass filter 225 so that a signal "-(A1•A2/2)•d(t-T1)" appears at the output terminal of the low pass filter 225. The output signal of the low pass filter 225 is applied to the amplifier 226, and is subjected to waveshaping thereby. The amplifier 226 outputs a recovered information signal "-d(t-T1)". The recovered information signal is applied from the amplifier 226 to an apparatus output terminal BOut2.

Sixth Embodiment

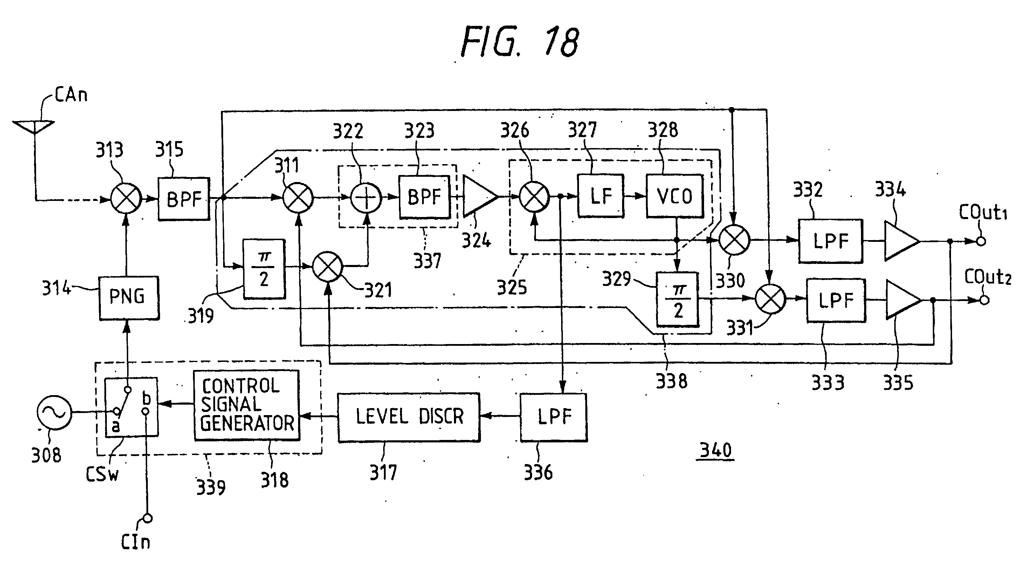

With reference to Fig. 18, a spread spectrum receiver or a spread spectrum demodulating apparatus 340 includes an antenna CAn, a multiplier (mixer) 313, a pseudonoise generator (spread code generator) 314, a band pass filter 315, a level discriminator 317, a control signal generator 318, a switch CSw, an oscillator 308. multipliers (mixers) 330 and 331, low pass filters 332 and 334, voltage comparators or amplifiers 334 and 335, a low pass filter 336, and a carrier reproducing circuit 338.

The carrier reproducing circuit 338 includes a multiplier (mixer) 311, a phase shifter 319, a multiplier (mixer) 321, a limiter amplifier 324, a PLL circuit 325, a carrier detector 337, and a phase shifter 329. The carrier detector 337 includes an adder 322 and a band pass filter 323. The PLL circuit 325 includes a multiplier (mixer) 326, a loop filter 327, and a voltage-controlled oscillator 328.

The antenna CAn leads to a first input terminal of the multiplier 313. The output terminal of the pseudonoise generator 314 is connected to a second input terminal of the multiplier 313. The output terminal of the multiplier 313 is connected to the input terminal of the band pass filter 315. The output terminal of the band pass filter 315 is connected to first input terminals of the multipliers 311, 330, and 331. The output terminal of the band pass filter 315 is also connected to the input terminal of the phase shifter 319. The output terminal of the phase shifter 319 is connected to a first input terminal of the multiplier 321.

The output terminal of the multiplier 311 is connected to a first input terminal of the adder 322. The output terminal of the multiplier 321 is connected to a second input terminal of the adder 322. The output terminal of the multiplier 322 is connected to a first input terminal of the multiplier 326 via the band pass filter 323 and the limiter amplifier 324. The output terminal of the multiplier 326 is connected to the control terminal of the oscillator 328 via the loop filter 327. The output terminal of the oscillator 328 is connected to second input terminals of the multipliers 326 and 330. The output terminal of the oscillator 328 is also connected to the input terminal of the phase shifter 329. The output terminal of the phase shifter 329 is connected to a second input terminal of the multiplier 331.

The output terminal of the multiplier 330 is connected to an apparatus output terminal COut1 via the low pass filter 332 and the voltage comparator 334. The output terminal of the multiplier 331 is connected to an apparatus output terminal COut2 via the low pass filter 333 and the voltage comparator 335.

The output terminal of the multiplier 326 is connected to the input terminal of the level discriminator 317 via the low pass filter 336. The output terminal of the level discriminator 317 is connected to the input terminal of the control signal generator 318. The output terminal of the control signal generator 318 is connected to a control terminal of the switch CSw.

The switch CSw has a movable contact and two fixed contacts "a" and "b". The movable contact of the switch CSw connects with either the fixed contact "a" or the fixed contact "b" thereof. The movable contact of the switch CSw is followed by the clock input terminal of the pseudonoise generator 314. The fixed contact "a" of the switch CSw is connected to the output terminal of the oscillator 308. The fixed contact "b" of the switch CSw is connected to an apparatus input terminal Cln.

An incoming spread spectrum signal caught by the antenna CAn is fed to the mixer 313 via a band pass filter (not shown). The incoming spread spectrum signal contains QPSK (quadrature phase shift keying) information. The incoming spread spectrum signal is expressed as "$A1 \cdot P(t) \cdot \{d1(t) \cdot \cos(\omega t + \theta) + d2(t) \cdot \sin(\omega t + \theta)\}$", where "A1" denotes the amplitude; "P(t)" denotes a spread code signal; "d1(t)" and "d2(t)" denote I (in-phase) and Q (quadrature) information signals respectively; "$\cos(\omega t + \theta)$" and "$\sin(\omega t + \theta)$" denote carriers; and "θ" denotes an initial phase of the carriers. Each of the information signals "d1(t)" and "d2(t)" is of the bi-value type which can be changed between "+1" and "-1". During an initial stage of operation of the demodulating apparatus 340, the movable contact of the switch CSw connects with the fixed contact "a" thereof so that the output signal of the oscillator 308 is fed to the pseudonoise generator 314 via the switch CSw as a clock signal. The oscillator 308 is preferably designed so that its oscillation frequency continuously varies between predetermined upper and lower limits. The pseudonoise generator 314 produces a signal representative of a spread code in response to the clock signal. The spread code signal is fed from the pseudonoise generator 314 to the multiplier 313. The spread code signal is expressed as "$P(t-\tau)$" where "τ" denotes a phase difference or a time offset relative to the spread code signal "P(t)" in the incoming spread spectrum signal.

The multiplier 313 despreads the incoming spread spectrum signal in response to the spread code signal "$P(t-\tau)$", thereby outputting a despread demodulation signal (recovered primary modulation signal) expressed as "$A1 \cdot P(t) \cdot P(t-\tau) \cdot (d1(t) \cdot \cos(\omega t + \theta) + d2(t) \cdot \sin(\omega t + \theta))\}$". When the phase difference "τ" is null, the despread demodulation signal is expressed as "$A1 \cdot \{d1(t) \cdot \cos(\omega t + \theta) + d2(t) \cdot \sin(\omega t + \theta)\}$". It should be noted that $P(t)^2 = 1$. The despread demodulation signal is fed from the multiplier 313 to the multipliers 311, 330, and 331, and the phase shifter 319 via the band pass filter 315. The band pass filter 315 is tuned to the frequency of the carriers "$\cos(\omega t + \theta)$" and "$\sin(\omega t + \theta)$".

A recovered information signal "d2(t)" is fed to the multiplier 311 from the voltage comparator 335. The device 311 multiplies the despread demodulation signal and the recovered information signal, thereby outputting a signal expressed as "$A1 \cdot \{d1(t) \cdot d2(t) \cdot \cos(\omega t + \theta) + \sin(\omega t + \theta)\}$". It should be noted that $d2(t)^2 = 1$.

The device 319 shifts the phase of the despread demodulation signal by 90 degrees ($\pi/2$ radian), and thus outputs a second despread demodulation signal expressed as "$A1 \cdot \{d1(t) \cdot \sin(\omega t + \theta) - d2(t) \cdot \cos(\omega t + \theta)\}$" The second despread demodulation signal is applied from the phase shifter 319 to the multiplier 321. A recovered information signal "d1(t)" is fed to the multiplier 321 from the voltage comparator 334. The device 321 multiplies the second despread demodulation signal and the recovered information signal, thereby outputting a signal expressed as "$A1 \cdot [\sin(\omega t + \theta) - d1(t) \cdot d2(t) \cdot \cos(\omega t + \theta)]$". It should be noted that $d1(t)^2 = 1$.

The adder 322 receives the output signals of the multipliers 311 and 321. The device 322 adds the output signals of the multipliers 311 and 321, thereby, outputting a signal expressed as "$A1 \cdot \sin(\omega t + \theta)$", Here, it is assumed that an addition loss of the adder 322 corresponds to a factor of 1/2. The output signal of the adder 322 is fed to the multiplier 326 within the PLL circuit 325 via the band pass filter 323 and the limiter amplifier 324. The band pass filter 323 is tuned to the carrier frequency "ω". The limiter amplifier 324 compensates for a variation in the intensity of the incoming spread spectrum signal.

In the PLL circuit 325, the multiplier 326 receives the output signal of the oscillator 328. The multiplier 326 serves as a phase comparator. The multiplier 326 compares the phase of the output signal of the limiter amplifier 324 and the phase the output signal of the oscillator 328, thereby generating a phase error signal (phase comparison signal) representing the result of the phase comparison. The phase error signal is fed from the multiplier 326 to the control terminal of the oscillator 328 via the loop filter 327 so that the frequency of oscillation of the oscillator 328 depends on the phase error signal. The PLL circuit 325 serves as a narrow-band tracking filter so that a good reproduced carrier essentially free from jitter components appears at the output terminal of the oscillator 328. In the case where the phase comparator 326 uses an analog multiplier, the reproduced carrier outputted from the oscillator 328 is expressed as "$A2 \cdot \cos(\omega t + \theta 0)$" where "A2" and "θ0" denote the amplitude and the phase respectively.

The low pass filter 336 receives the output signal of the multiplier 326. The low pass filter 336 removes carrier components from the output signal of the multiplier 326. The output signal of the band pass filter 315 has a waveform such as shown in the part [A] of Fig. 2. When the waveform of the output signal of the band pass filter 315 agrees with the waveform in the part [A] of Fig. 2, the output signal of the low pass filter 336 has a waveform shown in the part [B] of Fig. 2. In Fig. 2. "(b)" and "(d)" denote correlation points at which a good agreement occurs in spread code signal between a transmitter side and the receiver side (the demodulating apparatus side). At the correlation points "(b)" and "(d)", the output signal of the low pass filter 336 has a very small level of spread noise components. In Fig. 2, "(a)", "(c)", and "(e)" denote noncorrelation intervals during which a disagreement occurs in spread code signal between the transmitter side and the receiver side. During the noncorrelation intervals "(a)", "(c)", and "(e)", the output signal of the low pass filter 336 has a high level of spread noise components. Therefore, the output signal of the low pass filter 336 exhibits a large level difference between a correlation point and a noncorrelation interval.

The level discriminator 317 receives the output signal of the low pass filter 336, and senses the level (spread noise level) of the output signal of the low pass filter 336 to discriminate a correlation point from noncorrelation intervals. In other words, the level discriminator 317 serves to detect the correlation point.

A clock signal generator (not shown) reproduces a clock signal in response to, for example, the output signal of the oscillator 328 or the phase shifter 329. The reproduced clock signal is fed to the fixed contact "b" of the switch CSw via the apparatus input terminal CIn. At. the correlation points "(b)" and "(d)" in Fig. 2, the reproduced clock signal is the same as a clock signal for a pseudonoise signal in the transmitter side.

The level discriminator 317 informs the control signal generator 318 of the detection of the correlation point. The control signal generator 318 includes a flip-flop or a combination of a switch and a dc power source which generates a binary signal. The binary signal changes in logic state when the control signal generator 318 is informed of the detection of the correlation point. The control signal generator 318 outputs the binary signal to the switch CSw as a switch change signal. When the binary signal changes in logic state as previously described, the movable contact of the switch CSw connects with the fixed contact "b" thereof so that the reproduced clock signal same as the transmitter-side clock signal starts to be fed to the pseudonoise generator 314 via the switch CSw as a clock signal. Accordingly, the pseudonoise generator 314 starts to produce the spread code signal in response to the correct clock signal. In this way, there occurs the establishment of a good synchronization (agreement) in spread code signal between the transmitter and the receiver 340. During a later time, the synchronization (agreement) in spread code signal remains maintained.

As understood from the previous description, the control signal generator 318 and the switch CSw compose a device 339 for capturing the synchronization in spread code signal between the transmitter side and the receiver side.

As previously described, the multiplier 330 receives the output signal of the band pass filter 315. The multiplier 330 receives the reproduced carrier from the oscillator 328. The multiplier 330 executes synchronous demodulation. The device 330 multiplies the output signal (recovered primary modulation signal) of the band pass filter 315 and the reproduced carrier. When $\theta=\theta0$, the output signal of the multiplier 330 is expressed as "$(A1 \cdot A2/2) \cdot (d1(t) \cdot (1+\cos(2\omega t+\theta+\theta0))+d2(t) \cdot \sin(2\omega t+\theta+\theta0))$".

The phase shifter 329 receives the reproduced carrier from the oscillator 328. The device 329 shifts the phase of the reproduced carrier by 90 degrees ($\pi/2$ radian), thereby converting the reproduced carrier into a second reproduced carrier. The multiplier 331 receives the second reproduced carrier from the phase shifter 329. As previously described, the multiplier 331 receives the output signal of the band pass filter 315. The multiplier 331 executes synchronous demodulation. The device 331 multiplies the output signal (recovered primary modulation signal) of the band pass filter 315 and the second reproduced carrier. When $\theta=\theta0$, the output signal of the multiplier 331 is expressed as "$(A1 \cdot A2/2) \cdot [d1(t) \cdot \sin(2\omega t+\theta+\theta0) +d2(t) \cdot \{1-\cos(2\omega t+\theta+\theta0)\}]$".

The output signal of the multiplier 330 is fed to the low pass filter 332. High-frequency components (carrier components) of the output signal of the multiplier 330 are removed by the low pass filter 332 so that a signal expressed as "$(A1 \cdot A2/2) \cdot d1(t)$" appears at the output terminal of the low pass filter 332. The output signal of the low pass filter 332 is fed to the voltage comparator 334. The voltage comparator 334 serves as a waveshaper which converts the output signal of the low pass filter 332 into a recovered information signal expressed as "d1(t)". The recovered information signal "d1(t)" is applied from the voltage comparator 334 to the apparatus output terminal COut1. As previously described, the recovered information signal "d1(t)" is also fed from the voltage comparator 334 to the multiplier 321.

The output signal of the multiplier 331 is fed to the low pass filter 333. High-frequency components (carrier components) of the output signal of the multiplier 331 are removed by the low pass filter 333 so that a signal expressed as "$(A1 \cdot A2/2) \cdot d2(t)$" appears at the output terminal of the low pass filter 333. The output signal of the low pass filter 333 is fed to the voltage comparator 335. The voltage comparator 335 serves as a waveshaper which converts the output signal of the low pass filter 333 into a recovered information signal expressed as "d2(t)". The recovered information signal "d2(t)" is applied from the voltage comparator 335 to the apparatus output terminal COut2. As previously described, the recovered information signal "d2(t)" is also fed from the voltage comparator 335 to the multiplier 311.

Generally, a parallel-to-serial converter (not shown) follows the apparatus output terminals COut1 and COut2. The parallel-to-serial converter combines the recovered information signals "d1(t)" and "d2(t)" into an original digital information signal "d(t)".

**Claims**

1. A spread spectrum demodulating apparatus (210; 220; 230; 240; 250) comprising:

   a spread code generator (203) for generating a spread code;
   despreading demodulation means (202) for multiplying an incoming spread spectrum modulation signal and the spread code;

a carrier reproducing circuit (215) for reproducing a carrier

primary demodulating means (214) for demodulating an output signal of the despreading modulation means (202) into a recovered original information signal; and

synchronization detecting means (205) for discriminating a noise level of a signal from the carrier reproducing circuit and outputting, in response to the discriminated noise level, a signal for synchronisation of the despreading demodulation means; **characterised in that**

the carrier reproducing circuit (215) adapted to extract carrier components from said output signal of the despreading modulation means in order to reproduce the carrier and provides the reproduced carrier to the primary demodulating means (214) to be multiplied with said output of the despreading modulation means (202) to demodulate said output signal of the despreading modulation means (202); wherein

a PLL circuit (211) is contained in the carrier reproducing circuit (215) between the despreading demodulation means (202) and the primary demodulating means (214), the PLL circuit (211) is adapted for generating an error signal, the synchronization detecting means is adapted for discriminating the noise level of the error signal to output the signal for synchronization of the despreading demodulation means (202).

2. The spread spectrum demodulating apparatus (210; 220) of claim 1, wherein the carrier reproducing circuit (215) comprises:

a frequency doubler (216) for doubling a frequency of the output signal of the despreading demodulation means (202);

a limiter amplifier (218) for amplifying an output signal of the frequency doubler (216) while limiting an amplitude of an output signal thereof;

the PLL circuit (211) for producing a carrier generating signal in response to an output signal of the limiter amplifier (218);

a phase shifter (222) for shifting a phase of the carrier generating signal by a predetermined amount; and

a frequency divider (223) for dividing a frequency of an output signal of the phase shifter by a predetermined integer, and thereby reproducing the carrier in response to the output signal of the phase shifter (222).

3. The spread spectrum demodulating apparatus (230; 240; 250) of claim 1, wherein the carrier (215) reproducing circuit comprises:

inverse modulating means (228) for multiplying the recovered original information signal and the output signal of the despreading demodulation means (202) to cancel information-signal components of the output signal of the despreading modulation means (202);

carrier extracting means (217) for extracting a carrier component from an output signal of the inverse modulating means;

a limiter amplifier (218) for amplifying the extracted carrier component while limiting an amplitude of an output signal thereof;

the PLL circuit (211) for reproducing the carrier in response to an output signal of the limiter amplifier; and

a phase shifter (222) for shifting a phase of the reproduced carrier by a predetermined amount.

4. The spread spectrum demodulating apparatus (240) of claim 1, wherein the synchronization detecting means comprises a nonlinear detector (232) for enlarging a noise level difference between a synchronised point and a non-synchronised point, and a level discriminator (205) for discriminating a noise level in response to an output signal of the nonlinear detector (232).

5. The spread spectrum demodulating apparatus (240) of claim 4, wherein in use the nonlinear detector (232) outputs a signal with a constant level when the noise level of the error signal exceeds a given threshold level.

6. The spread spectrum demodulating apparatus (250) of claim 1, wherein the synchronization detecting means comprises a noise detector (227) for detecting noises at a synchronised point and a non-synchronised point, a filter (251) following the noise detector and removing a portion of the noise components, the portion corresponding to a signal component resulting from differentiation of an information signal, and a level discriminator (205) for discriminating a noise level in response to an output signal of the filter (251).

7. The spread spectrum demodulating apparatus (250) of claim 6, wherein the filter (251) comprises one of a comb filter or a notch filter tuned to a frequency related to a rate of an information signal.

8. A spread spectrum demodulating apparatus (340) for demodulating a multiple-phase PSK signal which has been spread spectrum modulated, comprising the apparatus of claim 1 and further comprising:

a low pass filter (336) for filtering the PLL error signal;

the carrier reproducing circuit (338) is adapted for phase shifting the reproduced carrier (329) by 90 degrees, thereby converting said reproduced carrier into a second reproduced carrier; and

the primary demodulating means is adapted for multiplying the reproduced carrier and the phase-shifted reproduced carrier by the despread demodulation signal, thereby demodulating multiple-phase PSK signal into a plurality of demodulation-resultant signals (315,330,331).

9. The spread spectrum demodulating apparatus of claim 8, wherein the carrier reproducing circuit (338) comprises detecting means (311, 321) for cancelling information-signal components of the multiple-phase PSK signal to detect a carrier component thereof, a limiter amplifier (324) for amplifying the detected carrier component while limiting an amplitude of an output signal thereof, and the PLL circuit (325) for reproducing a multiple-phase carrier and for generating the error signal in response to an output signal of the limiter amplifier (324).

**Patentansprüche**

1. Spread-Spektrum-Demoduliervorrichtung (210; 220; 230; 240; 250), aufweisend:

einen Spread-Codegenerator (203) zum Erzeugen eines Spread-Codes;
ein Despread-Demodulationsmittel (202) zum Multiplizieren eines ankommenden Spread-Spektrum-Modulationssignals und des Spread-Codes;
eine Träger reproduzierende Schaltung (215) zum Reproduzieren eines Trägers;
ein primäres Demoduliermittel (214) zum Demodulieren eines Ausgangssignals des Despread-Demodulationsmittels (202) in ein wiederhergestelltes Originalinformationssignal; und
ein eine Synchronisierung feststellendes Mittel (205) zum Unterscheiden eines Rauschpegels eines Signals von der Träger reproduzierenden Schaltung und, als Antwort auf den unterschiedenen Rauschpegel, Abgeben eines Signals zur Synchronisierung des Despread-Demodulationsmittels;

**dadurch gekennzeichnet,**
**dass** die Träger reproduzierende Schaltung (215) dafür eingerichtet ist, Trägerkomponenten aus dem Ausgangssignal des Despread-Modulationsmittels zu extrahieren, um den Träger zu reproduzieren, und den reproduzierten Träger an das primäre Demoduliermittel (214) liefert, um mit der Ausgabe des Despread-Modulationsmittels (202) multipliziert zu werden, um das Ausgangssignal des Despread-Modulationsmittels (202) zu demodulieren; worin eine PLL-Schaltung (211) in der Träger reproduzierenden Schaltung (215) zwischen dem Despread-Demodulationsmittel (202) und dem primären Demoduliermittel (214) enthalten ist, die PLL-Schaltung (211) dafür eingerichtet ist, ein Fehlersignal zu erzeugen, das eine Synchronisierung feststellende Mittel dafür eingerichtet ist, den Rauschpegel des Fehlersignals zu unterscheiden, um das Signal für eine Synchronisierung des Despread-Demodulationsmittels (202) abzugeben.

2. Spread-Spektrum-Demoduliervorrichtung (210; 220) nach Anspruch 1, worin die Träger reproduzierende Schaltung (215) aufweist:

einen Frequenzdoppler (216) zum Verdoppeln einer Frequenz des Ausgangssignals des Despread-Demodulationsmittels (202);
einen Begrenzerverstärker (218) zum Verstärken eines Ausgangssignals des Frequenzdopplers (216), während eine Amplitude seines Ausgangssignals begrenzt wird;
die PLL-Schaltung (211) zum Erzeugen eines Träger erzeugenden Signals als Antwort auf ein Ausgangssignal des Begrenzerverstärkers (218);
einen Phasenschieber (222) zum Verschieben einer Phase des Träger erzeugenden Signals um einen vorbestimmten Betrag; und
einen Frequenzteiler (223) zum Teilen einer Frequenz eines Ausgangssignals des Phasenschiebers um eine vorbestimmte ganze Zahl und dadurch Reproduzieren des Trägers als Antwort auf das Ausgangssignal des Phasenschiebers (222).

3. Spread-Spektrum-Demoduliervorrichtung (230; 240; 250) nach Anspruch 1,
worin die Träger (215) reproduzierende Schaltung aufweist:

ein inverses Moduliermittel (228) zum Multiplizieren des wiederhergestellten Originalinformationssignals und des Ausgangssignals des Despread-Demodulationsmittels (202), um Informationssignalkomponenten des Ausgangssignals des Despread-Modulationsmittels (202) auszulöschen;
ein Träger extrahierendes Mittel (217) zum Extrahieren einer Trägerkomponente aus einem Ausgangssignal des inversen Moduliermittels;
einen Begrenzerverstärker (218) zum Verstärken der extrahierten Trägerkomponente, während eine Amplitude seines Ausgangssignals begrenzt wird;
die PLL-Schaltung (211) zum Reproduzieren eines Trägers als Antwort auf ein Ausgangssignal des Begrenzerverstärkers; und
einen Phasenschieber (222) zum Verschieben einer Phase des reproduzierten Trägers um einen vorbestimmten Betrag.

4. Spread-Spektrum-Demoduliervorrichtung (240) nach Anspruch 1, worin das eine Synchronisierung feststellende Mittel einen nichtlinearen Detektor (232) zum Vergrößern einer Rauschpegeldifferenz zwischen einem synchronisierten Punkt und einem nicht synchronisierten Punkt und einen Pegeldiskriminator (205) zum Unterscheiden eines Rauschpegels als Antwort auf ein Ausgangssignal des nichtlinearen Detektors (232) aufweist.

5. Spread-Spektrum-Demoduliervorrichtung (240) nach Anspruch 4, worin im Gebrauch der nichtlineare Detektor (232) ein Signal mit einem konstanten Pegel abgibt, wenn der Rauschpegel des Fehlersignals einen gegebenen Schwellenpegel überschreitet.

6. Spread-Spektrum-Demoduliervorrichtung (250) nach Anspruch 1, worin das eine Synchronisierung feststellende Mittel einen Rauschdetektor (227) zum Feststellen von Rauschen an einem synchronisierten Punkt und einem nicht synchronisierten Punkt, ein Filter (251) nach dem Rauschdetektor, das einen Abschnitt der Rauschkomponenten entfernt, wobei der Abschnitt einer Signalkomponente entspricht, die aus einer Differentiation eines Informationssignals resultiert, und einen Pegeldiskriminator (205) zum Unterscheiden eines Rauschpegels als Antwort auf ein Ausgangssignal des Filters (251) aufweist.

7. Spread-Spektrum-Demoduliervorrichtung (250) nach Anspruch 6, worin das Filter (251) entweder ein Kammfilter oder ein Kerbfilter aufweist, das auf eine auf eine Rate eines Informationssignals bezogene Frequenz abgestimmt ist.

8. Spread-Spektrum-Demoduliervorrichtung (340) zum Demodulieren eines mehrphasigen PSK-Signals, das in ein Spread-Spektrum moduliert wurde, mit der Vorrichtung nach Anspruch 1 und ferner mit:

einem Tiefpassfilter (336) zum Filtern des PLL-Fehlersignals;

wobei die Träger reproduzierende Schaltung (338) dafür eingerichtet ist, den reproduzierten Träger (329) um 90 Grad in der Phase zu verschieben, wodurch der reproduzierende Träger in einen zweiten reproduzierten Träger umgewandelt wird; und
das primäre Demoduliermittel dafür eingerichtet ist, den reproduzierten Träger und den phasenverschobenen reproduzierten Träger mit dem Despread-Demodulationssignal zu multiplizieren, wodurch das mehrphasige PSK-Signal in mehrere aus der Demodulation resultierende Signale (315, 330, 331) demoduliert wird.

9. Spread-Spektrum-Demoduliervorrichtung nach Anspruch 8, worin die Träger reproduzierende Schaltung (338) ein Feststellmittel (311, 321) aufweist, um Informationssignalkomponenten des mehrphasigen PSK-Signals auszulöschen, um dessen Trägerkomponente festzustellen, einen Begrenzerverstärker (324), um die festgestellte Trägerkomponente zu verstärken, während eine Amplitude seines Ausgangssignals begrenzt wird, und die PLL-Schaltung (325) zum Reproduzieren eines mehrphasigen Trägers und zum Erzeugen des Fehlersignals als Antwort auf ein Ausgangssignal des Begrenzerverstärkers (324).

## Revendications

1. Appareil de démodulation à étalement de spectre (210 ; 220 ; 230 ; 240 ; 250) comprenant :

un générateur de code d'étalement (203) pour générer un code d'étalement ;
un moyen de démodulation de désétalement (202) pour multiplier un signal de modulation à spectre étalé entrant et le code d'étalement ;
un circuit de reproduction de porteuse (215) pour reproduire une porteuse ;
un moyen de démodulation primaire (214) pour démoduler un signal de sortie du moyen de modulation de désétalement (202) dans un signal informatif d'origine restauré ; et
un moyen de détection de synchronisation (205) pour discriminer un niveau de bruit d'un signal provenant du circuit de reproduction de porteuse et pour émettre en sortie, en réponse au niveau de bruit discriminé, un signal pour la synchronisation du moyen de démodulation de désétalement ; **caractérisé en ce que**
le circuit de reproduction de porteuse (215) adapté pour extraire les composants de porteuse dudit signal de sortie du moyen de modulation de désétalement afin de reproduire la porteuse et pour fournir la porteuse reproduite au moyen de démodulation primaire (214) devant être multipliée avec ladite sortie du moyen de modulation de désétalement (202) pour démoduler ledit signal de sortie du moyen de modulation de désétalement (202) ; dans lequel
un circuit PLL (à verrouillage de phase) (211) est contenu dans le circuit de reproduction de porteuse (215) entre le moyen de démodulation de désétalement (202) et le moyen de démodulation primaire (214), le circuit PLL (211) est adapté pour générer un signal d'erreur, le moyen de détection de synchronisation est adapté pour discriminer le niveau de bruit du signal d'erreur pour émettre en sortie le signal pour la synchronisation du moyen de démodulation de désétalement (202).

2. Appareil de démodulation à étalement de spectre (210 ; 220) selon la revendication 1, dans lequel le circuit de reproduction de porteuse (215) comprend :

un doubleur de fréquence (216) pour doubler une fréquence du signal de sortie du moyen de démodulation de désétalement (202) ;
un amplificateur limiteur (218) pour amplifier un signal de sortie du doubleur de fréquence (216) tout en limitant une amplitude d'un signal de sortie de celui-ci ;
le circuit PLL (211) pour produire un signal de génération de porteuse en réponse à un signal de sortie de l'amplificateur limiteur (218) ;
un déphaseur (222) pour décaler une phase du signal de génération de la porteuse d'une valeur prédéterminée ; et
un diviseur de fréquence (223) pour diviser une fréquence d'un signal de sortie du déphaseur par un nombre entier prédéterminé, et ainsi reproduire la porteuse en réponse au signal de sortie du déphaseur (222).

3. Appareil de démodulation à étalement de spectre (230 ; 240 ; 250) selon la revendication 1, dans lequel le circuit de reproduction de porteuse (215) comprend :

un moyen de modulation inverse (228) pour multiplier le signal informatif d'origine restauré et le signal de sortie du moyen de démodulation de désétalement (202) pour annuler les composants information-signal du signal de sortie du moyen de modulation de désétalement (202) ;
un moyen d'extraction de porteuse (217) pour extraire un composant de porteuse à partir d'un signal de sortie du moyen de modulation inverse ;
un amplificateur limiteur (218) pour amplifier le composant de porteuse extrait tout en limitant une amplitude d'un signal de sortie de celui-ci ;
le circuit PLL (211) pour reproduire la porteuse en réponse à un signal de sortie de l'amplificateur limiteur ; et
un déphaseur (222) pour décaler une phase de la porteuse reproduite d'une valeur prédéterminée.

4. Appareil de démodulation à étalement de spectre (240) selon la revendication 1, dans lequel le moyen de détection de synchronisation comprend un détecteur non linéaire (232) pour élargir une différence de niveau de bruit entre un point synchronisé et un point non synchronisé, et un discriminateur de niveau (205) pour discriminer un niveau de bruit en réponse à un signal de sortie du détecteur non linéaire (232).

5. Appareil de démodulation à étalement de spectre (240) selon la revendication 4, dans lequel en utilisation le détecteur non linéaire (232) émet en sortie un signal avec un niveau constant lorsque le niveau de bruit du signal d'erreur dépasse un niveau de seuil donné.

6. Appareil de démodulation à étalement de spectre (250) selon la revendication 1, dans lequel le moyen de détection de synchronisation comprend un détecteur de bruit (227) pour détecter des bruits à un point synchronisé et à un point non synchronisé, un filtre (251) suivant le détecteur de bruit et supprimant une partie des composantes de bruit, la partie correspondant à un composant de signal résultant de la différentiation d'un signal informatif, et un discriminateur de niveau (205) pour discriminer un niveau de bruit en réponse à un signal de sortie du filtre (251).

7. Appareil de démodulation à étalement de spectre (250) selon la revendication 6, dans lequel le filtre (251) comprend un filtre en peigne ou un filtre coupe-bande à bande étroite accordé sur une fréquence liée à un taux d'un signal informatif.

8. Appareil de démodulation à étalement de spectre (340) pour démoduler un signal de modulation de phase polyphasé (PSK) qui a été modulé par étalement de spectre, comprenant l'appareil selon la revendication 1 et comprenant en outre :

un filtre passe-bas (336) pour filtrer la boucle à verrouillage de phase signal ;
le circuit de reproduction de porteuse (338) est adapté pour déphaser la porteuse reproduite (329) de 90 degrés, convertissant ainsi ladite porteuse reproduite en seconde porteuse reproduite ; et
le moyen de démodulation primaire est adapté pour multiplier la porteuse reproduite et la porteuse reproduite déphasée par le signal de démodulation de désétalement, démodulant ainsi le signal de modulation de phase polyphasé en une pluralité de signaux résultant de la démodulation (315 ; 330 ; 331).

9.  Appareil de démodulation à étalement de spectre selon la revendication 8, dans lequel le circuit de reproduction de la porteuse (338) comprend un moyen de détection (311, 321) pour annuler les composants information-signal du signal de modulation de phase polyphasé pour détecter un composant de porteuse de celui-ci, un amplificateur limiteur (324) pour amplifier le composant de porteuse détecté tout en limitant une amplitude d'un signal de sortie de celui-ci, et le circuit PLL (325) pour reproduire une porteuse polyphasée et pour générer le signal d'erreur en réponse à un signal de sortie de l'amplificateur limiteur (324).

EP 0 654 914 B1

## FIG. 1

## FIG. 3

# FIG. 2

FIG. 4

FIG. 5

EP 0 654 914 B1

EP 0 654 914 B1

FIG. 6

FIG. 7

# FIG. 8

# FIG. 9

FIG. 10

EP 0 654 914 B1

# FIG. 11

[A] ⟶ t

[B] ⟶ t

[C] ⟶ t

[D] ⟶ t

TIME ⟶

# FIG. 12

$-\dfrac{\pi}{2}$  $\dfrac{\pi}{2}$  $2\pi$  $4\pi$  $6\pi$  $wt$

e  0  TIME ⟶

## FIG. 13

## FIG. 14

## FIG. 15

## FIG. 16

# FIG. 17

FIG. 18